# EUROPEAN PATENT SPECIFICATION

(11) **EP 0 593 815 B1**
(45) Date of publication and mention of the grant of the patent: **16.04.1997**
(21) Application number: 92118151.7
(22) Date of filing: 23.10.1992
(51) Int. Cl.: B65G 53/32

(54) **Pumping concrete**
Pumpen von Beton
Pompage de béton

(43) Date of publication of application: 27.04.1994
(73) Proprietor: Sika AG, vorm. Kaspar Winkler & Co., CH-8048 Zürich (CH)
(72) Inventor: Davidsson, Nils, S-175 34 Järfälla (SE)
(74) Representative: Blum, Rudolf Emil Ernst

(56) References cited:
- EP-A- 0 222 932
- WO-A-91/03437
- CH-A- 674 235
- GB-A- 2 162 142
- DATABASE WPIL Week 8632, Derwent Publications Ltd., London, GB; AN 86-208800 & JP-A-61 141 651 (KAO CORP)
- DATABASE WPIL Week 8720, Derwent Publications Ltd., London, GB; AN 87-139551 & JP-A-62 078 138 (KURITA WATER IND)

## Description

This invention relates to a method to start up a concrete pump. More particularly, it relates to lubricating concrete pumps, pipes and hoses.

### Background of the Invention

Pumping concrete is often more economical than conventional methods of transporting concrete from mixing plant to formwork. It enables a continuous feed of concrete to be placed at high speed with access to every part of the site. Concrete pumping is sometimes the only possible placing method where the job is inaccessible or the time-scale of construction work makes slower methods impractical.

The transport and placing of concrete by pump is an increasingly popular method. It is very fast an efficient and results in little waste of concrete. Not all concrete will pump, and minor variation in the concrete mix are sufficient to make an otherwise pumpable mix completely unpumpable. The sand grading is particularly important and variations in grading can rapidly cause unpumpability. If only a small part of the mix in the hopper proves to be unpumpable the pump may become blocked, leading to a time-consuming and expensive delay while the pump is stripped down and the blockage removed.

A common problem among concrete pumps is the starting phase. The pipes are dry and most likely covered with a thin layer of cement from previous pumpings.
When starting up the concrete will gradually be dehydrated passing through the dry pipes. This creates a plug that often get stuck before reaching the end of the pipe. It is time consuming to take down the pump to remove the plug.

Before pumping concrete, the pump and pipeline must be grouted with about 500 litres of a cement slurry or rich mortar in acoordance with the pump manufacturer's recommendations. Pumping should be started immediately after grouting.

### Procedure:

1 Pour slurry or mortar into hopper while operating the pump slowly.
2 Discharge excess grout to waste, not into formwork.
3 Retain some grout in the hopper to be remixed with the first hopper full of concrete.
4 Fit the protecting grill on the hopper before loading concrete.

When pumping downhill, a tight plug of damp cement bags or a sponge rubber ball should precede the grout to ensure that the walls of the pipe are properly lined.

But this procedure causes some new disadvantages:
- The concrete mixing plant has to mix the cement slurry separately. That takes time and money from the normal production.
- Today's standards and regulation says that the cement slurry shall not be transported in the same truck at the same time as the construction concrete. This adds the cost for an extra lorry to the invoice.
- That regulation is often broken and the cement slurry is put on top of the construction concrete in the lorry. There is a risk of mixing during transport which will influence the concrete quality negatively.
- The cement slurry must not be mixed with the concrete. Therefore it has to be unpumped on the outside of the mould and thereafter removed as waste.

GB-A-2 162 142 discloses a method for the transport of a concrete, whereby the concrete is transported in two components and only mixed at the place of use. First a cementitious mixture is transported followed by an aggregate mixture and water. Although the problem of a dry cementitious layer on the pipe walls is diminished by this method it does not overcome the necessity of prewatering the pipe and it furthermore necessitates large amendments in the conveying system (two separate feeds) and a very powerful mixing at the place of use.

### The invention

In any pumping system it is the material that contains the pressure gradient which allows the pumping process to take place. The pump creates the pressure and transfers it to the material, and the design of the punmp determines how effectively this is carried out.

Any saturated combination of solids and liquid has a segregation pressure. This is the pressure required to separate liquid and solids, thus transferring pressure from the liquid phase to the solids. When this occurs, the combination becomes an unpumpable material.

The objective of the invention is to produce a suspension of liquid and solids, with a segregation pressure greater than the pressure required to pass it through the pump and pipeline. Claim 1 defines a corresponding method in its broadest form. Advantageous embodiments thereof are specified in the dependent claims 2 to 6.

A high viscous aqueous suspension of silica fume and dispersed polymer containing a water-reducer or high-range water-reducer according to ASTM C 494 could eliminate all the mentioned disadvantages.

A feature of suspensions is that, when they are sheared, migration of the fine material tends to occur and this tends to produce on the wall of the pipe a layer of grout that acts as a lubricant. If the mix is particularly rich, however, this grout layer itself has a high resistance to shear at the interface between the concrete and the pipe wall. The lubrication at this interface has a direct bearing on the pressure required to force the concrete through the pipeline. If a layer of liquid of thin grout can be formed along the wall of the pipe this provides the necessary lubrication.

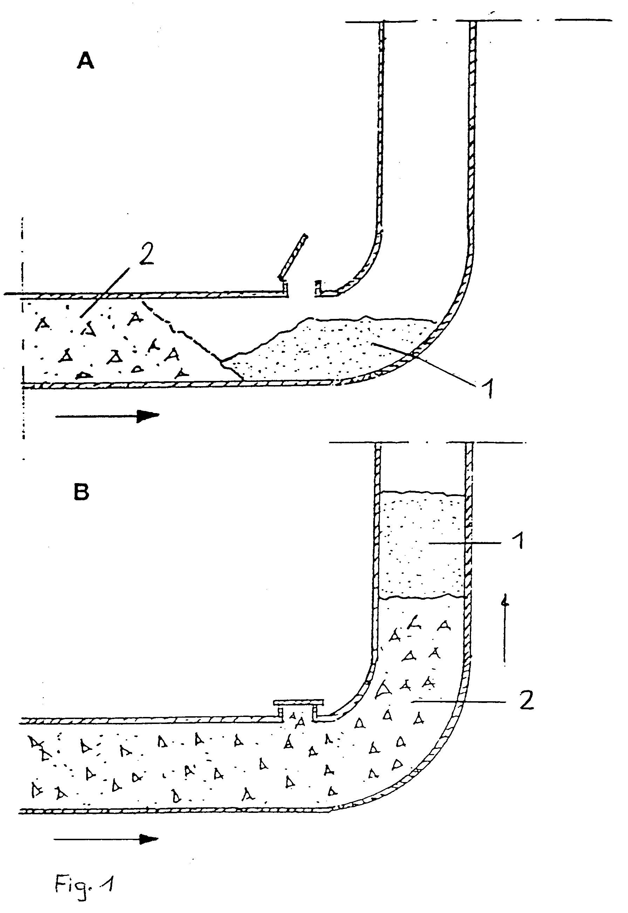

Figure 1 shows a cross-section of the pump pipes with the construction concrete pushing the lubricating suspension.

The method illustrated in Fig. 1 is further described in Example 1.

### Example 1

5-10 litres of suspension 1 is placed as a lubrication lump ahead of the concrete 2 front. It replaces prewatering and cement slurries in the starting phase.

When the pumping starts the suspension 1 is pushed ahead of the construction concrete 2 through the pipes and the following will happen:
- polymer dispersion will stick on the surfaces in the pipes.
- silica fume will stick on the surfaces in the pipes (covers 100 times bigger surface than cement)
- high-range water-reducer will keep the concrete wet during its transport through the pipes.

The high viscosity consistency will make sure that it won't flow away from the concrete front. (see Figure 1)

### Example 2

5-10 litres of suspension is poured in the end of the pipe after finished pumping. Thereafter a cleaning spunge (foam rubber) is placed in the pipe and the pump is driven backwards as it normally is when cleaned. A very thin layer of suspension sticks to the surface on the inside of the pipes and it stays fresh for up to 3 days. There is no need for prewatering when starting the pump again.

By adding a thickener, e.g. a cellulose derivate to the inventive suspension a further improvement can be achieved.
* Reduced risk that the product mixes with the concrete to fast.
* Longer potlife at application method according to example 2.
* Reduced risk that the product "flows away" from the concrete front when the pump pipe lean downwards.

The replacement of 500 litres of cement slurry by 5 litres of lubricating suspension results in a significant faster pumping process and in drastically reduce cost.

## Claims

1. A method for the start up of a concrete pump by introducing a lubricating suspension (1) into the pump, the pipe or the hose prior or after pumping concrete or mortar (2), which suspension (1) comprises the following composition:
1-60% by weight of in water dispersed polymers
5-75% by weight of amorphous silicon dioxide
0-5% by weight of at least one dispersing aid
0-15% by weight of at least one viscosity controlling agent
0-20% by weight of at least one water-reducer and/or high-range water-reducer
24-94% by weight of water.

2. The method according to claim 1, wherein homo and copolymers of vinyl esters, acrylic acid esters, styrene, butadiene, vinyl-halogen compounds dispersed in water is used as polymer.

3. The method according to claim 1, wherein as amorphous silicon dioxide a material having a specific surface (BET) according to Brunauer-Emmet-Teller from 10 to 400 m²/g and a SiO₂-content from 50 to 100% by weight is used.

4. The method according to claim 1, wherein poly-acrylic acid and/or magnesium silicate derivates is used as a dispersing aid.

5. The method according to claim 1, wherein cellulose derivates, alginates, polyethylene-oxide, xanthane, polysaccharides are used as viscosity controlling agent.

6. The method according to claim 1, wherein sulfonated melamine-formaldehyde resins, sulfonated naphthalene-formaldehyde resins, sulfonated vinylcopolymers, sulfamic acid-melamine resins, urea resins, lignin sulfonates, or salts of hydroxi- or polyhydroxy carboxylic acids are used as water-reducer or high-range water-reducer.

## Patentansprüche

1. Verfahren für das Starten einer Betonpumpe durch Einbringen einer Schmiermittel-Suspension (1) in die Pumpe, das Rohr oder den Schlauch vor oder nach dem Pumpen von Beton oder Mörtel (2), wobei die Suspension die folgende Zusammensetzung enthält oder daraus besteht:
1-60 Gew.-% in Wasser dispergierte Polymere
5-75 Gew.-% amorphes Siliciumdioxid
0- 5 Gew.-% mindestens eines Dispergierhilfsmittels
0-15 Gew.-% mindestens eines die Viskosität kontrollierenden Mittels
0-20 Gew.-% mindestens eines Betonverflüssigers und/oder Hochleistungsbetonverflüssigers
24-94 Gew.-% Wasser.

2. Das Verfahren gemäss Anspruch 1, worin Homo- und Copolymere von Vinylestern, Acrylsäureestern, Styrol, Butodien, Vinylhalogenverbindungen in Wasser dispergiert als Polymer verwendet werden.

3. Das Verfahren gemäss Anspruch 1, worin als amorphes Siliciumdioxyd ein Material mit einer spezifischen Oberfläche (BET) gemäss Brunauer-Emmet-Teller von 10 bis 400 m²/g und einem SiO₂-Gehalt von 50 bis 100 Gew.-% verwendet wird.

4. Das Verfahren gemäss Anspruch 1, worin Polyacrylsäure und/oder Magnesiumsilikatderivate als Dispergierhilfsmittel verwendet werden.

5. Das Verfahren gemäss Anspruch 1, worin Zellulosederivate, Alginate, Polyethylenoxid, Xanthan, Polysacharide als die Viskosität kontrollierendes Mittel verwendet werden.

6. Das Verfahren gemäss Anspruch 1, worin solfonierte Melamin-Formaldehydharze, sulfonierte Naphtalin-Formaldehydharze, sulfonierte Vinylcopolymere, Sulfaminsäure-Melaminharze, Harnstoff-Formaldehyd-Kunstharze, Ligninsulfonate oder Salze von Hydroxy- oder Polyhydroxycarbonsäuren als Betonverflüssiger oder Hochleistungsbetonverflüssiger verwendet werden.

## Revendications

1. Un procédé de démarrage d'une pompe à béton en introduisant une suspension lubrifiante (1) dans la pompe, la conduite ou le tuyau avant ou après le pompage du béton ou du mortier (2), dont la suspension (1) renferme la composition suivante:
1-60% en poids de polymères dispersés dans l'eau
5-75% en poids de dioxyde de silicium amorphe
0-5% en poids d'au moins une aide de dispersion
0-15% en poids d'au moins un agent de contrôle de viscosité
0-20% en poids d'au moins un fluidifiant et/ou superfluidifiant
24-94% en poids d'eau.

2. Le procédé suivant la revendication 1, dans lequel des homopolymères et des copolymères des esters vinyliques, des esters d'acide acrylique, de styrène, de butadiène, des composés d'halogénure vinylique dispersés dans l'eau sont utilisés comme polymère.

3. Le procédé suivant la revendication 1, dans lequel un matériau ayant une surface spécifique (BET) suivant Brunauer-Emmet-Teller de 10 à 400 m²/g et un contenu de SiO₂ de 50 à 100% en poids est utilisé comme dioxyde de silicium amorphe.

4. Le procédé suivant la revendication 1, dans lequel de l'acide polyacrylique et/ou des dérivés de silicate de magnésium sont utilisés comme agents de dispersion.

5. Le procédé suivant la revendication 1, dans lequel des dérivés de cellulose, des alginates, d'oxyde polyéthylènique, du xanthane, des polysaccharides sont utilisés comme agents de contrôle de viscosité.

6. Le procédé suivant la revendication 1, dans lequel des résines sulfonées de naphthalène-formaldéhyde, des copolymères vinylique sulfonés, des résines d'acide sulfamique-mélamine, des résines d'urée, des sulfonates de lignine ou des sels d'acide carboxylique hydroxy- ou polyhydroxy sont utilisés comme fluidifiant ou superfluidifiant.
